# FASCICULE DE BREVET EUROPEEN

(11) **EP 3 122 594 B1**
(45) Date de publication et mention de la délivrance du brevet: **09.05.2018**
(21) Numéro de dépôt: 14814910.7
(22) Date de dépôt: 12.11.2014
(51) Int. Cl.: B60P 7/08, F16B 21/02

(54) **DISPOSITIF D'ACCROCHAGE A UN RAIL**
VORRICHTUNG ZUR BEFESTIGUNG AN EINER SCHIENE
DEVICE FOR ATTACHMENT TO A RAIL

(30) Priorité: 27.03.2014 FR 1452639
(43) Date de publication de la demande: 01.02.2017
(73) Titulaire: A. RAYMOND et Cie, 38000 Grenoble (FR)
(72) Inventeur: LAMOUREUX, David, F-38100 Grenoble (FR)
(74) Mandataire: Prugneau, Philippe
(86) Numéro de dépôt international: PCT/FR2014/000239
(87) Numéro de publication internationale: WO 2015/144996

(56) Documents cités:
- EP-A1- 1 932 719
- EP-A1- 2 028 043
- FR-A1- 2 675 442

## Description

### Domaine technique

La présente invention se rapporte à un dispositif d'accrochage le long d'un rail pour permettre l'arrimage de charges ou de sangles.

La présente invention se rapporte plus particulièrement à un dispositif d'accrochage à un rail profilé en forme de U avec des ailes formant un canal. Le dispositif comprend un verrou destiné à être introduit à l'intérieur du canal et y être retenu par les ailes du rail. Le dispositif comprend en outre un organe de verrouillage du verrou dans le rail comportant un arbre rotatif solidaire du verrou et s'étendant axialement à travers une plaque d'appui destinée à reposer sur le dessus du canal.

### Technique antérieure

De tels dispositifs sont utilisés notamment dans des soutes d'avion ou des remorques de véhicules de transport. Les rails sont par exemple disposés contre les parois du véhicule et les dispositifs d'accrochage sont placés sur les rails de manière à permettre l'arrimage de sangles pour par exemple stabiliser une charge dans le véhicule.

Des dispositifs de ce type sont notamment connus par exemple par le document FR 2 675 442. Celui ci montre un dispositif d'arrimage de charges à un rail support, pouvant être mis en place manuellement par insertion, rotation et immobilisation d'un système de verrouillage. Ce système comprend une vis-enclume possédant une tête rectangulaire de largeur inférieure à la largeur du rail. Lors de l'insertion dans le rail, la vis-enclume est donc orientée parallèlement au rail. Une rotation d'un quart de tour de la vis amène ensuite la tête de vis sous les ailes du rail. Un bras de levier permet ensuite de plaquer la vis enclume sous les ailes du rail.

Un tel dispositif présente cependant plusieurs inconvénients. En effet, l'effet bras de levier ne permet pas de jauger correctement la force nécessaire pour soulever la vis enclume et effectuer le serrage. Le dispositif de serrage peut par exemple casser dans le cas d'un abaissement trop important du levier ou bien ne pas être suffisamment serré dans le cas d'un abaissement insuffisant du levier.

De plus, lors de la rotation de la vis enclume, le dispositif de serrage peut également se déplacer le long du rail en attendant que le levier soit abaissé. Il est donc possible de serrer le dispositif au mauvais endroit sur le rail.

Enfin, il est également possible de ne pas tourner suffisamment la vis enclume et d'abaisser le levier alors que la vis enclume n'est pas en position de serrage. Dans ce cas, le dispositif pourrait donc être insuffisamment accroché, et se décrocher dès lors qu'une charge lourde lui serait attribuée.

Ce dispositif n'est donc pas adapté pour une utilisation simple, rapide et fiable d'un verrouillage sur rail.

### Résumé de l'invention

Le but de l'invention est donc de proposer un dispositif d'accrochage à un rail qui ne présente pas les inconvénients indiqués plus haut.

A cet effet, l'invention a pour objet un dispositif d'accrochage à un rail profilé en forme de U avec des ailes formant un canal, comprenant un verrou destiné à être introduit à l'intérieur du canal et y être retenu par les ailes du rail, et un organe de verrouillage du verrou dans le rail comportant un arbre rotatif solidaire du verrou et s'étendant axialement à travers une plaque d'appui destinée à reposer sur le dessus du canal, caractérisé en ce que l'organe de verrouillage comporte une came adaptée pour déplacer la plaque d'appui axialement par rapport à l'arbre rotatif lorsque l'arbre rotatif est tourné dans un sens ou dans l'autre, la plaque d'appui s'approchant du verrou lorsque l'arbre rotatif est tourné dans un sens de rotation et la plaque d'appui s'éloignant du verrou lorsque l'arbre rotatif est tourné en sens contraire.

L'idée à la base de l'invention est donc d'utiliser une came qui transforme le mouvement en rotation de l'arbre rotatif en un mouvement en translation de la plaque d'appui le long de l'arbre de manière à optimiser le serrage des ailes du rail entre le verrou et la plaque d'appui.

Une telle came apporte une plus grande sensation de serrage et permet ainsi de prévenir la casse du dispositif lors du serrage. De plus, la came selon l'invention prévient des serrages involontaires comme cela pourrait arriver facilement avec un abaissement du bras de levier.

Selon une particularité du dispositif d'accrochage selon l'invention, le verrou peut être de forme allongée et être lié en mouvement rotatif avec l'arbre de manière à présenter une position d'insertion dans laquelle le verrou s'étend suivant le rail et une position d'accrochage dans laquelle le verrou s'étend transversalement au rail en étant serré contre les ailes du rail.

Selon encore une autre particularité du dispositif d'accrochage selon l'invention, il est prévu un coulisseau de guidage disposé sous la plaque d'appui, ce coulisseau étant destiné a être introduit à l'intérieur du canal, et au moins un plot d'indexage qui s'étend perpendiculairement depuis la plaque d'appui dans le coulisseau et la came est agencée de telle manière que lors de la rotation de l'arbre dans le premier sens de rotation, le plot d'indexage saille hors du coulisseau et lors de la rotation de l'arbre dans l'autre sens de rotation, le plot d'indexage s'efface à l'intérieur du coulisseau.

Avec cet agencement du dispositif d'accrochage selon l'invention, on peut effectuer de manière synchrone le pivotement du verrou en position d'accrochage, un déplacement de la plaque d'appui en direction du verrou perpendiculairement au rail et une insertion du plot d'indexage dans le fond du rail. Au final, une seule rotation de l'arbre, par exemple une rotation d'un quart de tour, suffit pour réaliser l'accrochage, le serrage et le blocage en translation du dispositif d'accrochage dans le rail.

Un tel agencement permet donc une utilisation simple, rapide et fiable du dispositif d'accrochage.

Le dispositif d'accrochage selon l'invention peut présenter les particularités suivantes :
- la came est formée d'une première partie de came solidaire de l'arbre rotatif et d'une deuxième partie de came solidaire de la plaque d'appui dans laquelle tourne librement l'arbre rotatif, la première partie de came étant superposée à la seconde partie de came à travers une surface de contact hélicoïdale ;
- le rail a un fond définissant des lobes d'indexage dans lequel vient s'insérer le plot d'indexage ;
- il comprend une poignée montée à une extrémité de l'arbre rotatif et la poignée peut être surmontée d'un anneau d'accrochage ;
- la came peut comprendre un moyen de blocage qui bloque la rotation de la première partie de came par rapport à la seconde partie de came en fin de course de verrouillage et/ou de déverrouillage ;
- la plaque d'appui peut comprendre deux bandes souples qui permettent une bonne mise sous contrainte du rail et qui peuvent servir de moyen de rattrapage de jeu anti-vibration ;
- il peut comprendre un indicateur d'état qui indique un état du dispositif d'accrochage en position de verrouillage complet et un état du dispositif d'accrochage en position de déverrouillage complet ;
- ledit indicateur d'état peut être constitué par deux repères visuels différents disposés sur la plaque d'appui et espacés angulairement l'un de l'autre sur un trajet en arc de cercle d'une fenêtre aménagée dans la poignée.

D'autres caractéristiques, avantages et détails de la présente invention ressortiront à la lecture de la description suivante d'un exemple de réalisation de l'invention donné à titre illustratif et non limitatif, cette description étant réalisée en référence avec les dessins joints.

### Présentation sommaire des dessins

La figure 1 illustre de façon schématique selon une vue éclatée en perspective le dispositif d'accrochage selon l'invention ;
La figure 2 illustre de façon schématique en perspective le dispositif d'accrochage de la figure 1 monté dans un rail ;
La figure 3 illustre de façon schématique en coupe le dispositif d'accrochage selon l'invention montré sur la figure 2 ;
Les figures 4a et 4b illustrent de façon schématique en perspective différents états de verrouillage/déverrouillage du dispositif d'accrochage selon l'invention ;
Les figures 5a à 5c illustrent suivant une vue en coupe en perspective le dispositif d'accrochage selon l'invention dans différentes positions de verrouillage/déverrouillage ;
Les figures 6a à 6c illustrent un exemple de réalisation d'un indicateur d'état pour le dispositif d'accrochage dans les positions verrouillée et déverrouillée.

### Description des modes de réalisation

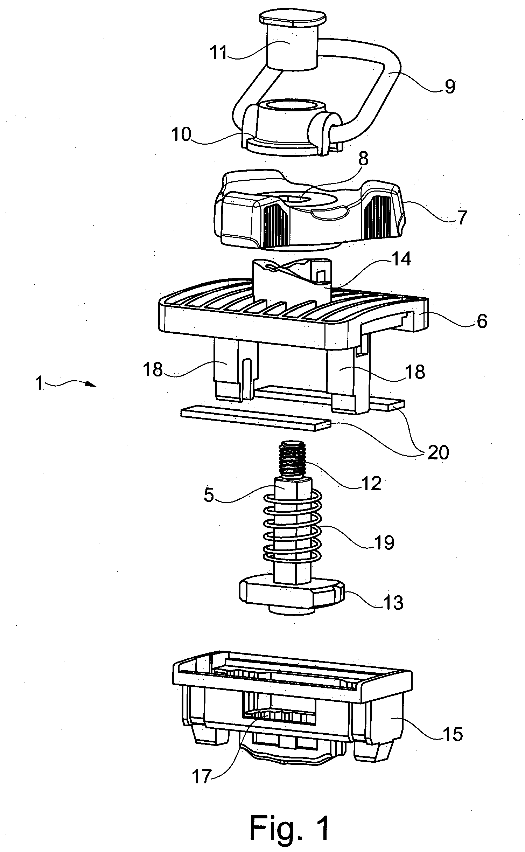

Sur les figures 1 à 5c, on a illustré un exemple du dispositif d'accrochage 1 à un rail profilé selon l'invention.

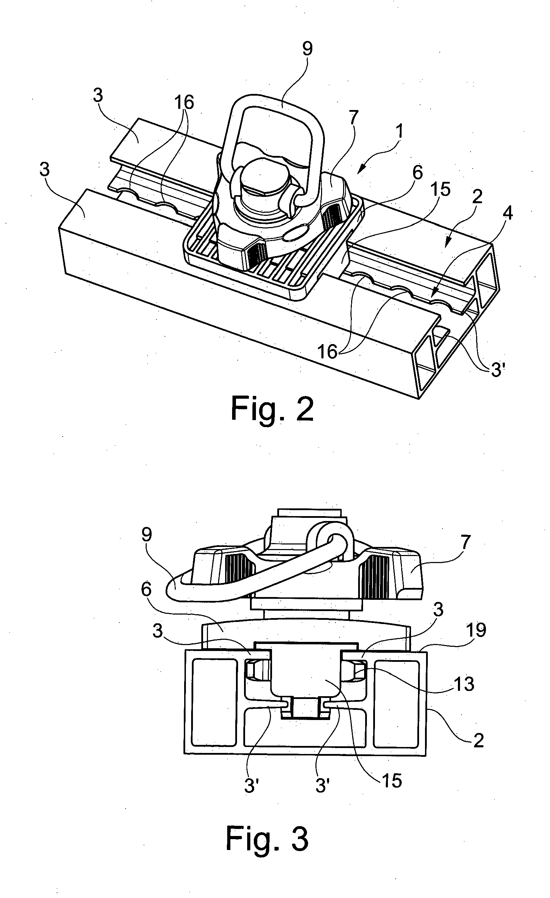

La figure 1 montre suivant une vue en éclatée les éléments constitutifs du dispositif d'accrochage 1 et sur la figure 2, le dispositif d'accrochage 1 est montré inséré dans un rail profilé 2, par exemple un rail en aluminium, qui est en forme de U avec des ailes latérales 3 formant entre elles un canal 4.

Le dispositif d'accrochage 1 selon l'invention peut être inséré et accroché dans le rail 2 à n'importe quel endroit le long de celui-ci. Le dispositif d'accrochage 1 peut également être retiré du rail ou même encore après avoir était accroché, être réutilisé à un autre endroit du rail sans pour cela être sorti du rail.

Sur la figure 1, le dispositif d'accrochage 1 comprend un arbre rotatif 5 qui traverse une plaque d'appui 6, qui peut être par exemple en matière plastique moulée, destinée à reposer sur le dessus du canal 4, c'est à dire au-dessus des ailes 3 du rail.

Le dispositif d'accrochage 1 comprend une poignée de verrouillage/déverrouillage 7 qui est rotative au dessus de la plaque d'appui 6 et qui est solidaire en mouvement rotatif avec une extrémité de l'arbre 5. Par exemple la poignée peut comporter un trou central carré 8 comme visible sur la figure 1 traversé par une partie d'extrémité à section carrée complémentaire de l'arbre 5.

La poignée de verrouillage est ici une poignée de forme sensiblement triangulaire, chaque pointe du triangle présentant deux faces opposées de préhension de la poignée ce qui permet de faire tourner l'arbre 5 dans un sens ou dans l'autre pour verrouiller ou déverrouiller le dispositif d'accrochage 1 dans le rail 2.

Le dispositif d'accrochage 1 comprend en outre un anneau d'accrochage 9 qui sert de moyen d'arrimage de charges. L'anneau 9 est monté sur le dessus de la poignée de verrouillage 7 à l'aide d'un support d'anneau 10 à écrou 11 vissé sur l'extrémité libre filetée 12 de l'arbre 5. L'anneau d'accrochage 9 est monté pivotant dans le support 10.

Le dispositif d'accrochage 1 comprend en outre une plaque verrou 13 ou lardon ici traversée par l'arbre rotatif 5.

Cette plaque verrou 13 a une forme allongée et est ici principalement rectangulaire, la largeur du verrou étant inférieure à la largeur du canal entre les ailes 3 et la longueur du verrou étant supérieure à la largeur du canal.

Comme montré sur la figure 1, le verrou 13 est lié en mouvement rotatif avec l'arbre 5 comme pour la poignée 7.

Selon l'invention, le dispositif d'accrochage 1 comporte une came de verrouillage 14 disposée entre la poignée de verrouillage 7 et la plaque d'appui 6.

Cette came de verrouillage 14 transforme le mouvement rotatif de la poignée en un mouvement de translation axial de la plaque d'appui 6 le long de l'arbre 5. Plus particulièrement lorsque la poignée est tournée dans un sens de rotation correspondant au sens de verrouillage du dispositif d'accrochage 1 dans le rail 2, la came 14 agit pour rapprocher la plaque d'appui 6 du verrou suivant la direction axiale et lorsque la poignée est tournée dans le sens contraire qui correspondant au sens de déverrouillage du dispositif d'accrochage 1 dans le rail 2, la came agit pour éloigner la plaque d'appui du verrou.

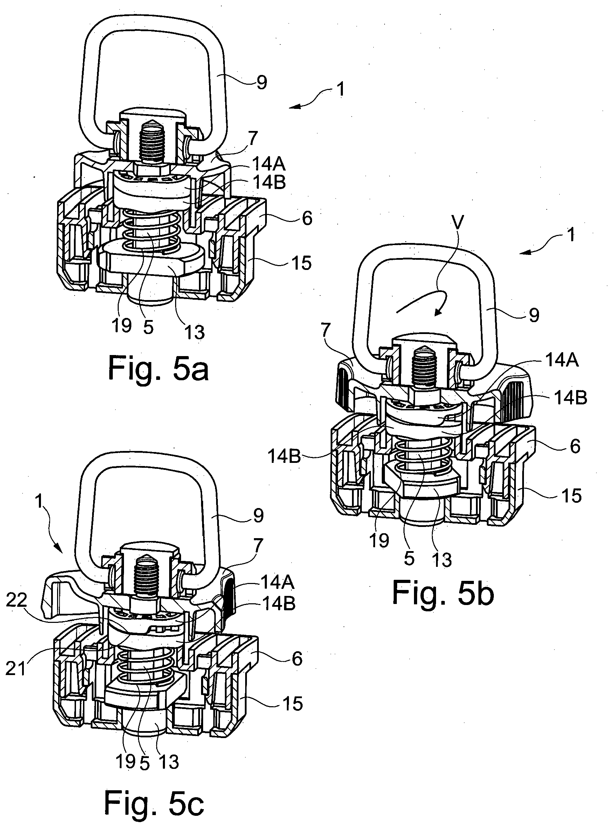

La came 14 est formée par deux disques superposés à surface de contact hélicoïdale. Les figures 5a à 5c montrent selon une vue en coupe axiale les deux disques 14A et 14B de la came 14. Le disque supérieur 14A est monté dans la poignée de verrouillage 7 et est solidaire en rotation de l'arbre 5 tandis que disque inférieur 14B est monté sur le dessus de la plaque d'appui 6, l'arbre 5 tournant librement dans le disque inférieur 14B.

La surface hélicoïdale de la partie de came 14A forme une rampe d'appui pour la surface hélicoïdale de la partie de came 14B, cette rampe générant le mouvement en translation axial de la plaque d'appui le long de l'arbre 5 comme expliqué plus loin.

Le dispositif d'accrochage 1 selon l'invention comprend en outre ici un coulisseau 15 servant de guide qui vient s'encastrer sous la plaque d'appui 6. Ce coulisseau 15 est prévu pour s'insérer dans le canal du rail. Il est prévu pour s'étendre à proximité du fond du rail, lequel fond présente ici deux ailes latérales intérieures 3' définissant le long du rail un alignement d'échancrures en forme de lobes d'indexage 16.

Le coulisseau 15 est creux pour loger le verrou 13, lequel est ici lié en mouvement rotatif avec l'arbre 5. En position de verrouillage du dispositif d'accrochage 1, le verrou 13 saille par des fentes latérales 17 du coulisseau 15.

Selon l'invention, le dispositif d'accrochage 1 peut présenter avantageusement un ou plusieurs pions ou plots d'indexage 18, ici deux plots 18 alignés suivant l'axe du rail de guidage, qui sont formés sous le dessous de la plaque d'appui et qui traversent le coulisseau 15 en s'étendant perpendiculairement au fond du rail et à la plaque d'appui et qui viennent se loger dans les lobes d'indexage 16 quand le dispositif d'accrochage 1 est en position verrouillée. Ces plots d'indexage 18 servent à bloquer en translation le dispositif d'accrochage dans le rail lorsqu'il est dans un état verrouillé.

Ici, les plots d'indexage 18 sont montés coulissants dans le coulisseau 15 de telle manière que lorsque la poignée 7 est tournée dans le sens de verrouillage, les plots d'indexage 18 saillent hors du coulisseau vers le fond du rail par l'effet de la came 14 et lorsque la poignée 7 est tournée dans le sens inverse (sens du déverrouillage), les plots d'indexage 18 s'effacent à l'intérieur du coulisseau 15 par l'effet de la came 14.

Pour cela, on peut prévoir un agencement selon lequel le coulisseau 15 vient se caler dans le fond du rail tandis que la plaque d'appui est montée mobile par rapport au coulisseau suivant l'axe de l'arbre 5. Les plots d'indexage 18, qui peuvent être d'une seule pièce de moulage avec la plaque d'appui 6, sont liés en mouvement de translation axial avec la plaque d'appui.

Un ressort de rappel 19, ici un ressort spiral, est monté autour de l'arbre 5 entre le verrou 13 et le disque inférieur 14B de la came pour ramener la plaque d'appui 6 en éloignement avec le verrou 13 lorsque la poignée 7 est manoeuvrée dans le sens de déverrouillage.

Le dispositif d'accrochage 1 selon l'invention peut comprendre en outre deux bandes souples 20, par exemple en élastomère formant avec la plaque d'appui une seule pièce obtenue par "bi-injection", disposées de chaque côté de la plaque d'appui 6 de manière à venir en contact respectivement avec les ailes 3 du rail comme montré sur la figure 3. Les deux bandes souples 20 pourraient aussi être rapportées sur les deux côtés de la plaque d'appui par collage par exemple.

Ces bandes souples 20 permettent d'obtenir une bonne mise sous contrainte du rail avec une surface d'appui étendue et permettent un rattrapage de jeu avec réduction des vibrations du dispositif d'accrochage 1 sur le rail.

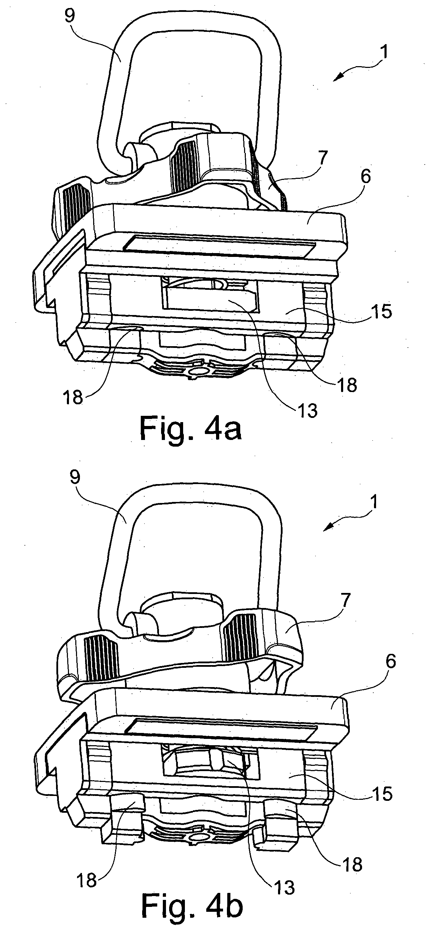

Pour positionner le dispositif d'accrochage 1 selon l'invention dans le rail 2, il est nécessaire de présenter le verrou 13 en alignement axial dans le coulisseau 15 comme montré sur les figures 4a et 5a. Sur ces figures, on voit que les plots d'indexage 18 sont rétractés dans le coulisseau 15.

Le coulisseau 15 avec le verrou 13 est inséré dans le canal du rail 2. La plaque d'appui 6 est disposée au-dessus de la face supérieure des ailes 3 du rail. Les bandes de rattrapage de jeu anti vibration viennent en interposition entre la plaque d'appui 6 et les ailes 3 du rail.

Sur la figure 5b, la poignée 7 a été tournée dans le sens de verrouillage montré par la flèche V ce qui provoque une rotation de la partie de came 14A sur la partie de came 14B laquelle forme une rampe et il en résulte que la plaque d'appui 6 est rapprochée du verrou 13.

A la fin d'un quart de tour de rotation de la poignée 7 dans le sens de la flèche V, le verrou 13 a tourné de 90° sous les ailes 3 du rail et saille à l'extérieur du coulisseau 15 comme visible sur les figures 4b et 5c, transversalement au rail. En même temps, les plots d'indexage 18 saillent sous le coulisseau 15.

Le verrou 13 est alors serré contre la face intérieure des ailes 3 du rail tandis que les plots 18 sont engagés dans les lobes 16 dans le fond du rail.

Le retrait du dispositif d'accrochage 1 du rail se fait par simple rotation de un quart de tour de la poignée 7 dans le sens inverse à la flèche V et le ressort de rappel 19 agit alors sur la plaque d'appui 6 pour l'écarter du verrou 13.

On peut prévoir entre les deux parties de came 14A et 14B un moyen de blocage qui bloque la rotation de la première partie de came par rapport à la seconde partie de came en fin de course de verrouillage et/ou de déverrouillage. Par exemple comme illustré sur la figure 5c, en position de verrouillage complet de la poignée 7, un cran 21 prévu sur la partie de came 14B vient s'engager dans une encoche 22 prévue sur la partie de came 14A ce qui permet un blocage mutuel en rotation des parties de came 14A et 14B.

Comme montré sur la figure 3, la poignée 7 et l'anneau 9 peuvent être conçus de telle manière à ce que l'anneau 9 puisse venir s'effacer sur la poignée 7.

Il est entendu que l'anneau 9 pourrait aussi être poinçonné sur la poignée 7 sans sortir du cadre de l'invention.

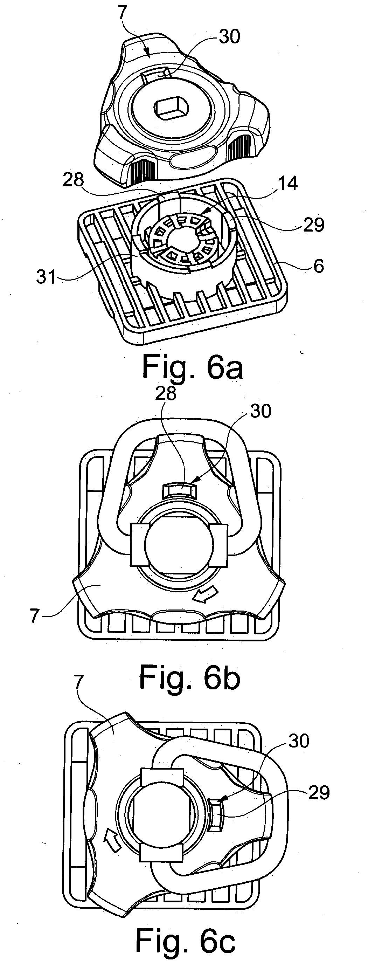

Sur la figure 6a, on a illustré un exemple de réalisation d'un indicateur d'état du dispositif d'accrochage en position de verrouillage complet ou en position de déverrouillage complet, c'est à dire quand le verrou est dans sa position d'accrochage dans le canal du rail ou quand le verrou est dans sa position d'insertion dans le canal du rail.

Cet indicateur est constitué ici par deux repères visuels différents 28 et 29 espacés angulairement l'un par rapport à l'autre sur un trajet en arc de cercle d'une fenêtre 30 aménagée dans la poignée 7.

Les deux repères visuels 28 et 29 sont ici des marquages de couleurs différentes apposés sur la plaque d'appui 6, ici sur une couronne 31 saillant depuis le dessus de la plaque d'appui 6 et qui est recouverte par la poignée 7. Les deux repères sont ici espacés à 90° l'un de l'autre sur le bord périphérique supérieur de la couronne 31.

Le repère 28 est par exemple un marquage rouge et le repère 29 est par exemple un marquage vert.

La fenêtre 30 est aménagée dans la poignée 7 en surplomb du bord supérieur périphérique de la couronne 31 de manière à venir en alignement avec les repères 28 et 29 lors d'une manoeuvre en rotation de la poignée 7.

Sur la figure 6b, le dispositif d'accrochage est dans un état de verrouillage complet, le verrou 13 est dans sa position d'accrochage dans le canal du rail, ce qui est indiqué par l'alignement visible de la fenêtre 30 dans la poignée 7 avec la marque rouge 28 (le fond de la fenêtre 30 est complètement rouge).

Sur la figure 6c, la poignée 7 a été tournée d'un quart de tour dans le sens du déverrouillage par rapport à sa position sur la figure 6b. Le dispositif d'accrochage est maintenant dans un état de déverrouillage complet. Le verrou 13 est sa position d'insertion dans le canal du rail, ce qui est indiqué par l'alignement visible de la fenêtre 30 dans la poignée 7 avec la marque verte 29 (le fond de la fenêtre 30 est complètement vert).

On comprend qu'avec un dispositif d'accrochage et d'arrimage modulaire selon l'invention, on obtient par un mouvement continu en rotation de la poignée de manoeuvre 7, une mise en pression progressive de la plaque d'appui contre les ailes du rail et il en résulte un serrage maîtrisé sans que l'anneau d'accrochage 9 soit nécessairement tournée.

## Revendications

1. Dispositif d'accrochage (1) à un rail profilé (2) en forme de U avec des ailes (3) formant un canal (4), comprenant un verrou (13) destiné à être introduit à l'intérieur du canal et y être retenu par les ailes du rail, et un organe de verrouillage du verrou dans le rail comportant un arbre rotatif (5) solidaire du verrou et s'étendant axialement à travers une plaque d'appui (6) destinée à reposer sur le dessus du canal, **caractérisé en ce que** l'organe de verrouillage comporte une came (14) adaptée pour déplacer la plaque d'appui axialement par rapport à l'arbre rotatif lorsque l'arbre rotatif est tourné dans un sens ou dans l'autre, la plaque d'appui s'approchant du verrou lorsque l'arbre rotatif est tourné dans un sens de rotation et la plaque d'appui s'éloignant du verrou lorsque l'arbre rotatif est tourné en sens contraire.

2. Dispositif d'accrochage selon la revendication 1, **caractérisé en ce que** le verrou (13) est de forme allongée et est lié en mouvement rotatif avec l'arbre (5) de manière à présenter une position d'insertion dans laquelle le verrou s'étend suivant le rail et une position d'accrochage dans laquelle le verrou s'étend transversalement par rapport rail.

3. Dispositif d'accrochage selon la revendication 1, **caractérisé en ce qu'**il comprend un coulisseau de guidage (15) disposé sous la plaque d'appui (6) et qui est destiné a être introduit à l'intérieur du canal, et au moins un plot d'indexage (18) qui s'étend perpendiculairement depuis la plaque d'appui dans le coulisseau et **en ce que** la came est agencée de telle manière que lors de la rotation de l'arbre dans le premier sens de rotation, le plot d'indexage saille hors du coulisseau et lors de la rotation de l'arbre dans l'autre sens de rotation, le plot d'indexage s'efface à l'intérieur du coulisseau.

4. Dispositif d'accrochage selon la revendication 1, **caractérisé en ce que** la came (14) est formée d'une première partie de camé (14A) solidaire de l'arbre rotatif et d'une deuxième partie de came (14B) solidaire de la plaque d'appui dans laquelle tourne librement l'arbre rotatif, la première partie de came étant superposée à la seconde partie de came à travers une surface de contact hélicoïdale.

5. Dispositif d'accrochage selon la revendication 3, **caractérisé en ce que** le rail a un fond définissant des lobes d'indexage (16) dans lequel vient s'insérer le plot d'indexage (18).

6. Dispositif d'accrochage selon la revendication 1, **caractérisé en ce qu'**il comprend une poignée (7) montée à une extrémité de l'arbre rotatif (5).

7. Dispositif d'accrochage selon la revendication 6, **caractérisé en ce que** la poignée (7) est surmontée d'un anneau d'accrochage (9).

8. Dispositif d'accrochage selon la revendication 4, **caractérisé en ce que** la came (14) comprend un moyen de blocage (21) qui bloque la rotation de la première partie de came par rapport à la seconde partie de came en fin de course de verrouillage et/ou de déverrouillage.

9. Dispositif d'accrochage selon l'une des revendications précédentes, **caractérisé en ce que** la plaque d'appui comprend deux bandes souples (20) qui permettent une bonne mise sous contrainte du rail et qui peuvent servir de moyen de rattrapage de jeu anti-vibration.

10. Dispositif d'accrochage selon l'une des revendications précédentes, **caractérisé en ce qu'**il comprend un indicateur d'état (28,29,30) du dispositif d'accrochage en position de verrouillage complet ou en position de déverrouillage complet.

11. Dispositif d'accrochage selon les revendications 6 et 10, **caractérisé en ce que** ledit indicateur d'état est constitué par deux repères visuels différents (28,29) disposés sur la plaque d'appui (6) et espacés angulairement l'un de l'autre sur un trajet en arc de cercle d'une fenêtre (30) aménagée dans la poignée(7).

## Patentansprüche

1. Vorrichtung (1) zur Befestigung an einer U-förmigen Profilschiene (2) mit Flügeln (3), die einen Kanal (4) bilden, umfassend einen Riegel (13), der dazu bestimmt ist, in das Innere des Kanals eingeführt und hier von den Flügeln der Schiene gehalten zu werden, und ein Element zur Verriegelung des Riegels in der Schiene, umfassend eine rotierende Welle (5), die mit dem Riegel verbunden ist und sich axial über eine Stützplatte (6) erstreckt, die dazu bestimmt ist, oben auf dem Kanal zu liegen, **dadurch gekennzeichnet, dass** das Verriegelungselement eine Nocke (14) umfasst, die eingerichtet ist, um die Stützplatte axial in Bezug zur rotierenden Welle zu verschieben, wenn die rotierende Welle in eine Richtung oder in die andere gedreht wird, wobei sich die Stützplatte dem Riegel annähert, wenn die rotierende Platte in eine Rotationsrichtung gedreht wird, und sich die Stützplatte von dem Riegel entfernt, wenn die rotierende Welle in die entgegengesetzte Richtung gedreht wird.

2. Befestigungsvorrichtung nach Anspruch 1, **dadurch gekennzeichnet, dass** der Riegel (13) eine längliche Form hat und in Rotationsbewegung mit der Welle (5) verbunden ist, um eine Einsetzposition, in der sich der Riegel entlang der Schiene erstreckt, und eine Befestigungsposition aufzuweisen, in der sich der Riegel quer zur Schiene erstreckt.

3. Befestigungsvorrichtung nach Anspruch 1, **dadurch gekennzeichnet, dass** sie eine Gleitführung (15), die unter der Stützplatte (6) angeordnet ist, und die dazu bestimmt ist, in den Kanal eingeführt zu werden, und mindestens einen Indexierungsstift (18) umfasst, der sich senkrecht von der Stützfläche in der Gleitführung erstreckt, und dass die Nocke derart angeordnet ist, dass bei der Rotation der Welle in die erste Rotationsrichtung der Indexierungsstift aus der Gleitschiene herausragt, und bei der Rotation der Welle in die andere Rotationsrichtung der Indexierungsstift in der Gleitschiene verschwindet.

4. Befestigungsvorrichtung Nach Anspruch 1, **dadurch gekennzeichnet, dass** die Nocke (14) von einem ersten Nockenteil (14A), der mit der rotierenden Welle verbunden ist, und einem zweiten Nockenteil (14B), der mit der Stützplatte verbunden ist, in der sich die rotierende Welle frei dreht, wobei der erste Nockenteil über dem zweiten Nockenteil über eine spiralförmige Kontaktfläche angeordnet ist.

5. Befestigungsvorrichtung nach Anspruch 3, **dadurch gekennzeichnet, dass** die Schiene einen Boden hat, der Indexierungsvorsprünge (16) definiert, in die sich der Indexierungsstift (18) einsetzt.

6. Befestigungsvorrichtung nach Anspruch 1, **dadurch gekennzeichnet, dass** sie einen Griff (7) umfasst, der an einem Ende der rotierenden Welle (5) montiert ist.

7. Befestigungsvorrichtung nach Anspruch 6, **dadurch gekennzeichnet, dass** der Griff (7) über einem Befestigungsring (9) montiert ist.

8. Befestigungsvorrichtung nach Anspruch 4, **dadurch gekennzeichnet, dass** die Nocke (14) ein Feststellmittel (21) umfasst, das die Rotation des ersten Nockenteils in Bezug zu dem zweiten Nockenteil nach einem Verriegelungs- und/oder Entriegelungsweg feststellt.

9. Befestigungsvorrichtung nach einem der vorhergehenden Ansprüche, **dadurch gekennzeichnet, dass** die Stützplatte zwei flexible Bänder (20) umfasst, die eine gute Spannung der Schiene ermöglichen, und die als Antivibrations-Spielnachstellungsmittel dienen können.

10. Befestigungsvorrichtung nach einem der vorhergehenden Ansprüche, **dadurch gekennzeichnet, dass** sie eine Zustandsanzeige (28, 29, 30) der Befestigungsvorrichtung in vollständiger Verriegelungsposition oder in vollständiger Entriegelungsposition umfasst.

11. Befestigungsvorrichtung nach den Ansprüchen 6 und 10, **dadurch gekennzeichnet, dass** die Zustandsanzeige von zwei unterschiedlichen Sichtanzeigen (28, 29) gebildet ist, die auf der Stützplatte (6) angeordnet und im Winkel zueinander auf einer kreisbogenförmigen Bahn eines in dem Griff (7) vorgesehenen Fensters (30) beabstandet sind.

## Claims

1. An attachment device (1) for attaching to a generally channel-section rail (2) having rims (3) forming a channel (4), the attachment device comprising a latch (13) for inserting into the inside of the channel and for being retained therein by the rims of the rail, and a locking member for locking the latch in the rail, which member comprises a rotary shaft (5) secured to the latch and extending axially through a bearing plate (6) for resting on the top of the channel, the attachment device being **characterized in that** the locking member comprises a cam (14) adapted to move the bearing plate axially relative to the rotary shaft when the rotary shaft is turned in one direction or the other, the bearing plate coming closer to the latch when the rotary shaft is turned in one direction of rotation and the bearing plate moving away from the latch when the rotary shaft is turned in the opposite direction.

2. An attachment device according to claim 1, **characterized in that** the latch (13) is of elongate shape and is constrained to turn with the shaft (5) so as to present an insertion position in which the latch extends along the rail, and an attachment position in which the latch extends transversely relative to the rail.

3. An attachment device according to claim 1, **characterized in that** it comprises both a guide slide (15) arranged under the bearing plate (6) and designed to be inserted inside the channel, and also at least one indexing stud (18) that extends perpendicularly from the bearing plate in the slide, and **in that** the cam is arranged in such a manner that when the shaft is turned in the first direction of rotation, the indexing stud projects from the slide, and when the shaft is turned in the opposite direction of rotation, the indexing stud is retracted into the inside of the slide.

4. An attachment device according to claim 1, **characterized in that** the cam (14) is made up of a first cam portion (14A) secured to the rotary shaft and a second cam portion (14B) secured to the bearing plate in which the rotary shaft can turn freely, the first cam portion being superposed on the second cam portion via a helical contact surface.

5. An attachment device according to claim 3, **characterized in that** the rail has a bottom defining indexing lobes (16) in which the indexing stud (18) becomes inserted.

6. An attachment device according to claim 1, **characterized in that** it comprises a handle (7) mounted at one end of the rotary shaft (5).

7. An attachment device according to claim 6, **characterized in that** the handle (7) is surmounted by an attachment ring (9).

8. An attachment device according to claim 4, **characterized in that** the cam (14) comprises blocking means (21) for blocking movement of the first cam portion in rotation relative to the second cam portion at the end of the locking and/or unlocking stroke.

9. An attachment device according to any preceding claim, **characterized in that** the bearing plate comprises two flexible strips (20) that enable the rail to be put under stress in controlled manner and that act as anti-vibration slack take-up means.

10. An attachment device according to any preceding claim, **characterized in that** it comprises a state indicator (28, 29, 30) for indicating the state of the attachment device in the fully locked position or in the fully unlocked position.

11. An attachment device according to claims 6 and 10, **characterized in that** said state indicator is constituted by two different visible marks (28, 29) arranged on the bearing plate (6) and angularly spaced apart from each other on a circularly arcuate path of a window (30) formed in the handle (7).
